# EUROPEAN PATENT APPLICATION

(11) **EP 2 143 741 A1**
(43) Date of publication of application: **13.01.2010**
(21) Application number: 09164169.6
(22) Date of filing: 30.06.2009
(51) Int. Cl.: C08F 255/00, C08F 255/02, C08F 255/04, C08F 255/08, C08L 51/06, C10M 149/06, C10M 159/12, C10N 20/02, C10N 20/04, C10N 30/02, C10N 40/04, C10N 40/06, C10N 40/08, C10N 40/25, C10N 60/14, C10N 70/00

(54) **Functionalized olefin copolymer additive composition**

(30) Priority: 30.06.2008 US 164893
(71) Applicant: Afton Chemical Corporation, Richmond, VA 23219 (US)
(72) Inventor: Mathur, Naresh C., Midlothian, VA 23114 (US); Duggal, Akhilesh, Midlothian, VA 23112 (US); Devlin, Mark T., Richmond, VA 23233 (US)
(74) Representative: Dunleavy, Kevin James

(57) **Abstract**

An additive concentrate comprising a viscosity index modifying copolymer comprising the reaction product of an acylated ethylene-olefin copolymer and a polyamine, and lubricating compositions containing the same are provided. Methods of improving boundary film resistance of a lubricating composition and modifying the viscosity of a lubricating composition are also provided.

## Description

### FIELD OF THE DISCLOSURE

This disclosure relates to a highly grafted, multi-functionalized olefin copolymer lubricant additive useful as an improved viscosity index modifier and lubricating compositions comprising thereof. The present disclosure further relates to a lubricant additive effective for imparting boundary film resistance and viscosity modifying properties to a lubricating composition. The present disclosure also provides a method of at least one of improving boundary film resistance of a lubricating composition and modifying the viscosity of a lubricating composition.

### BACKGROUND OF THE DISCLOSURE

Polymer additives for improving properties of lubricating compositions, such as viscosity index improving additives, are known. Viscosity index improving additives reduce the influence of temperature change on fluid viscosity. Of the viscosity index improving lubricant additives, olefin copolymers are particularly suitable for such applications. Ethylene-propylene copolymers and ethylene-alpha olefin non-conjugated diene terpolymers, which have been further derivatized to provide bifunctional properties in lubricating compositions, illustrate this type of additive.

Lubricant additives produced from the reaction product of an acylated olefin copolymer and certain polyamines are also known. However, such additives were generally preferred to contain only one primary amine, as it was previously thought that more than one primary amine would cause coupling and/or gelling of the olefin copolymers. An unexpected result of the present disclosure is that certain polyamines containing two or more primary or secondary amine functional groups can be reacted with an acylated ethylene-olefin copolymer to produce a lubricant additive with improved characteristics of the olefin copolymers.

### SUMMARY OF THE DISCLOSURE

In accordance with the disclosure, there is provided a viscosity index modifying copolymer comprising the reaction product of an acylated ethylene-olefin copolymer and a polyamine, wherein the polyamine comprises at least two primary or secondary amine functional groups.

In an aspect, there is also provided an additive concentrate comprising, on an active ingredient basis, from about 20 to about 90 weight percent of a carrier or diluent oil and from about 3 to about 45 weight percent of a viscosity index modifying copolymer comprising the reaction product of an acylated ethylene-olefin copolymer and a polyamine, wherein the polyamine comprises at least two primary or secondary amine functional groups.

Moreover, there is also provided a lubricating composition comprising a major amount of an oil of lubricating viscosity and a minor amount of a viscosity index modifying copolymer comprising the reaction product of an acylated ethylene-olefin copolymer and a polyamine, wherein the polyamine comprises at least two primary or secondary amine functional groups.

Further, there is provided a method of improving boundary film resistance of a lubricating composition comprising providing a major amount of an oil of lubricating viscosity and mixing with said oil a minor amount of a viscosity index modifying copolymer comprising the reaction product of an acylated ethylene-olefin copolymer and a polyamine, wherein the polyamine comprises at least two primary or secondary amine functional groups

Another aspect of the disclosure is directed to a method of modifying the viscosity of a lubricating composition comprising combining a major amount of an oil of lubricating viscosity and a minor amount of a viscosity index modifying copolymer comprising the reaction product of an acylated ethylene-olefin copolymer and a polyamine, wherein the polyamine comprises at least two primary or secondary amine functional groups.

Additionally, there is provided a method of lubricating an automotive engine comprising adding to and operating in the crankcase of the engine a lubricating composition comprising a major amount of an oil of lubricating viscosity and a minor amount of a viscosity index modifying copolymer comprising the reaction product of an acylated ethylene-olefin copolymer and a polyamine, wherein the polyamine comprises at least two primary or secondary amine functional groups.

### DESCRIPTION OF THE EMBODIMENTS

As used herein, the terms "polymer" and "copolymer" is understood to mean a polymer having more than one type of repeating unit and include, for example, oligomers, copolymers, ethylene copolymers, terpolymers, tetrapolymers and interpolymers. These materials can contain minor amounts of other olefinic monomers so long as the basic characteristics of the copolymers are not materially changed. As used herein, the term "monomer" is understood to mean a chemical compound or composition having an olefin double bond present in the compound or composition.

The olefin copolymer substrate employed in the viscosity index modifying copolymer of the present disclosure can be prepared from ethylene and one or more C₃ to C₂₃ alpha-olefins, for example copolymers of ethylene and propylene. Other alpha-olefins include, but are not limited to, 1-butene, 1-pentene, 1-hexene, 1-octene, and styrene; α,ω-diolefins such as 1,5-hexadiene, 1,6-heptadiene, and 1,7-octadiene; branched chain alpha-olefins such as 4-methylbutene-1, 5-methylpentene-1, and 6-methylheptene-1; and mixtures thereof. Such alpha-olefins can also be used in combination with ethylene and one or more C₃ to C₂₃ alpha-olefins to form a terpolymer. The acylated copolymers of the present disclosure include, but are not limited to, those described in U.S. Patent No. 6,107,257, the disclosure of which is herein incorporated by reference.

More complex polymer substrates, often designated as interpolymers, can be prepared using another component. Non-limiting examples of such a component generally used to prepare an interpolymer substrate can be a polyene monomer, such as non-conjugated dienes and trienes. The non-conjugated diene component can have from about 5 to about 14 carbon atoms in the chain. In an aspect, the diene monomer can be characterized by the presence of a vinyl group in its structure and can include cyclic and bicyclo compounds. Representative dienes include, but are not limited to, 1, 4-hexadiene, 1,4-cyclohexadiene, dicyclopentadiene, 5-ethylidene-2-norbornene, 5-methylene-2-norborene, 1,5-heptadiene, and 1,6-octadiene. A mixture of more than one diene can be used in the preparation of the interpolymer. In an embodiment, a non-conjugated diene for preparing a terpolymer or interpolymer substrate can be 1,4-hexadiene.

The triene component can have at least two non-conjugated double bonds, and up to about 30 carbon atoms in the chain. Non-limiting examples of typical trienes useful in preparing the interpolymer of the disclosure include 1-isopropylidene-3α,4,7,7α-tetrahydroindene, 1-isopropylidenedicyclopentadiene, dihydro-isodicyclopentadiene, and 2-(2-methylene-4-methyl-3-pentenyl)[2.2.1] bicyclo-5-heptene.

Ethylene-propylene or higher alpha-olefin copolymers can comprise from about 15 to about 80 mole percent ethylene and from about 20 to about 85 mole percent C₃ to C₂₃ alpha-olefin. In an aspect, the proportions can range from about 35 to about 75 mole percent ethylene and from about 25 to about 65 mole percent of a C₃ to C₂₃ alpha-olefin. In another aspect, the proportions can range from about 50 to about 70 mole percent ethylene and about 30 to about 50 mole percent C₃ to C₂₃ alpha-olefin. In yet another aspect, the proportions can range from about 55 to about 65 mole percent ethylene and about 35 to about 45 mole percent C₃ to C₂₃ alpha-olefin.

Terpolymer variations of the foregoing polymers can contain from about 0.1 to about 10 mole percent of a non-conjugated diene or triene.

The ethylene-olefin polymer substrate can be an oil soluble, linear or branched polymer having a number average molecular weight ranging from about 10,000 to about 150,000, as determined by gel permeation chromatography and universal calibration standardization. In an embodiment, the number average molecular weight of the ethylene-olefin copolymer ranges from about 20,000 to about 45,000.

The polymerization reaction used to form the ethylene-olefin copolymer substrate is generally carried out in the presence of a conventional Ziegler-Natta or metallocene catalyst system. The polymerization medium is not specific and can include solution, slurry, or gas phase processes, as known to those skilled in the art. When solution polymerization is employed, the solvent can be any suitable inert hydrocarbon solvent that is liquid under reaction conditions for polymerization of alpha-olefins; examples of suitable hydrocarbon solvents include, but are not limited to, straight chain paraffins having from about 5 to about 8 carbon atoms. In an aspect of the present disclosure, hexane can be used as a solvent. In another aspect, aromatic hydrocarbons, for example, aromatic hydrocarbons having a single benzene nucleus, such as benzene, toluene and the like; and saturated cyclic hydrocarbons having boiling point ranges approximating those of the straight chain paraffinic hydrocarbons and the aromatic hydrocarbons described above, can be suitable solvents. The solvent selected can be a mixture of one or more of the foregoing hydrocarbons. In yet another aspect, when slurry polymerization is employed, the liquid phase for polymerization can be liquid propylene. It is desirable that the polymerization medium be free of substances that will interfere with the catalyst components.

An ethylenically unsaturated carboxylic acid material is next grafted onto the ethylene-olefin copolymer substrate backbone to form an acylated ethylene-olefin copolymer. Carboxylic reactants which are suitable for grafting onto the ethylene-olefin copolymer can contain at least one ethylenic bond and at least one carboxylic acid or its anhydride groups or a polar group which is convertible into said carboxyl groups by oxidation or hydrolysis. In an aspect, the carboxylic reactants can contain two carboxylic acid groups or its anhydride groups or polar groups which are convertible into said carboxyl groups by oxidation or hydrolysis. In another aspect, the carboxylic reactants are selected from the group consisting of acrylic, methacrylic, cinnamic, crotonic, maleic, fumaric and itaconic reactants. In yet another aspect, the carboxylic reactants are selected from the group consisting of maleic acid, fumaric acid, maleic anhydride, or a mixture of two or more of these. In a further aspect, maleic anhydride or a derivative thereof can be suitable due to its commercial availability and ease of reaction. In another aspect where unsaturated ethylene-olefin copolymers or terpolymers are used, itaconic acid or its anhydride is can be suitable due to its reduced tendency to form a cross-linked structure during the free-radical grafting process.

The ethylenically unsaturated carboxylic acid materials typically can provide one or two carboxylic groups per mole of reactant to the grafted polymer. For example, methyl methacrylate can provide one carboxylic group per molecule to the grafted polymer while maleic anhydride can provide two carboxylic groups per molecule to the grafted polymer.

The carboxylic reactant can be grafted onto the prescribed polymer backbone in an amount to provide 0.3 to 0.75 carboxylic groups per 1000 number average molecular weight units of the polymer backbone. In an aspect, 0.3 to 0.5 carboxylic groups per 1000 number average molecular weight units can be used. For example, a copolymer substrate with Mₙ of about 20,000 can be grafted with about 6 to about 10 carboxylic groups per polymer chain, such as about 3 to about 5 moles of maleic anhydride per mole of polymer. As a further example, a copolymer with Mₙ of about 100,000 can be grafted with about 30 to about 50 carboxylic groups per polymer chain, such as about 15 to about 25 moles of maleic anhydride per polymer chain. The minimum level of functionality is the level needed to achieve the minimum satisfactory dispersancy performance. Above the maximum functionality level little, if any, additional dispersancy performance is noted and other properties of the additive can be adversely affected.

The grafting reaction to form the acylated ethylene-olefin copolymers can generally carried out with the aid of a free-radical initiator either in solution or in bulk, as in an extruder or intensive mixing device. When the polymerization is carried out in hexane solution, it is economically convenient to carry out the grafting reaction in hexane as described in U.S. Patents 4,340,689, 4,670,515 and 4,948,842, all of which are incorporated herein by reference. The resulting polymer intermediate is characterized by having carboxylic acid acylating functionality randomly within its structure.

In the bulk process for forming the acylated ethylene-olefin copolymers, the olefin copolymer is fed to rubber or plastic processing equipment such as an extruder, intensive mixer or masticator, heated to a temperature of about 150° to about 400°C and the ethylenically unsaturated carboxylic acid reagent and free-radical initiator are separately co-fed to the molten polymer to effect grafting. The reaction is carried out optionally with mixing conditions to effect shearing and grafting of the ethylene copolymers according to U.S. Patent 5,075,383, incorporated herein by reference. The processing equipment is generally purged with nitrogen to prevent oxidation of the polymer and to aid in venting unreacted reagents and byproducts of the grafting reaction. The residence time in the processing equipment is sufficient to provide for the desired degree of acylation and to allow for purification of the acylated copolymer via venting. Mineral or synthetic lubricating oil can optionally be added to the processing equipment after the venting stage to dissolve the acylated copolymer.

The free-radical initiators which can be used to graft the ethylenically unsaturated carboxylic acid material to the polymer backbone include, but are not limited to, peroxides, hydroperoxides, peresters, and also azo compounds. In an aspect, free-radical initiators which have a boiling point greater than about 100°C and decompose thermally within the grafting temperature range to provide free radicals can be used. Non-limiting representatives of these free-radical initiators are azobutyronitrile, dicumyl peroxide, 2,5-dimethylhexane-2,5-bis-tertiarybutyl peroxide and 2,5-dimethyl-hex-3-yne-2,5-bis-tertiary-butyl peroxide. The initiator can be used in an amount of from about 0.005% to about 1% by weight based on the weight of the reaction mixture.

Other methods known in the art for effecting reaction of ethylene-olefin copolymers with ethylenically unsaturated carboxylic reagents, such as halogenation reactions, thermal or "ene" reactions or mixtures thereof, can be used instead of the free-radical grafting process. Such reactions are conveniently carried out in mineral oil or bulk by heating the reactants at temperatures of about 250° to about 400°C under an inert atmosphere to avoid the generation of free radicals and oxidation byproducts. In an embodiment, "ene" reactions can be a suitable method of grafting when the ethylene-olefin copolymer contains unsaturation. To achieve the high graft levels, about 0.3 to about 0.5 carboxylic groups per 1000 Mₙ, it can be necessary to follow or proceed the "ene" or thermal graft reaction with a free radical graft reaction.

The acylated ethylene-olefin copolymer intermediate can be reacted with a polyamine compound. Suitable polyamines include aromatic and nonaromatic polyamines containing at least two primary or secondary amine functional groups. Non-limiting examples of suitable polyamines include 4,4-diaminodiphenylamine represented by formula (I): 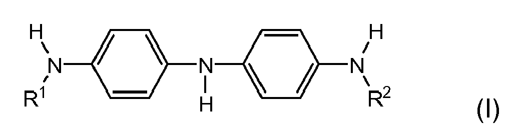 wherein R¹ and R² are each independently H or alkyl group comprising from about 1 to about 24 carbon atoms; polytetrahydrofuran bis(aminopropyl) terminated;
hexamethylene diamine; bis(aminopropyl) piperazine; and phenylenediamine represented by formula (II): 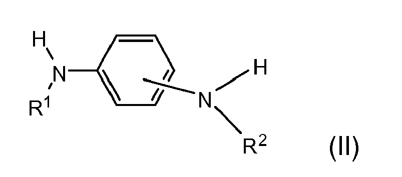 wherein R¹ and R² are each independently H or alkyl group comprising from about 1 to about 24 carbon atoms.

The reaction of the acylated ethylene-olefin copolymer substrate intermediate and the polyamine compound can be conducted by heating a solution of the polymer substrate under inert conditions and then adding the polyamine compound to the heated solution generally with mixing to effect the reaction. It can be convenient to employ an oil solution of the polymer substrate heated to about 140° to about 175° C, while maintaining the solution under a nitrogen blanket. The polyamine compound is added to this solution and the reaction can be effected under the noted conditions.

Typically, the polyamine compound(s) can be dissolved in a surfactant and added to a mineral or synthetic lubricating oil or solvent solution containing the acylated ethylene-olefin copolymer. This solution is heated with agitation under an inert gas purge at a temperature in the range of about 120° to about 200°C as described in U. S. Patent No. 5,384,371, the disclosure of which is herein incorporated by reference. The reactions can be carried out conveniently in a stirred reactor under nitrogen purge. However, it is also possible to add a surfactant solution of the polyamine compound to zones downstream from the graft reaction-vent zones in a twin screw extruder reactor.

Surfactants which can be used in carrying out the reaction of the acylated ethylene-olefin copolymer with the polyamine(s) include, but are not limited to, those characterized as having (a) solubility characteristics compatible with mineral or synthetic lubricating oil, (b) boiling point and vapor pressure characteristics so as not to alter the flash point of the oil and (c) polarity suitable for solubilizing the polyamine(s). A suitable non-limiting class of such surfactants includes the reaction products of aliphatic and aromatic hydroxy compounds with ethylene oxide, propylene oxide or mixtures thereof. Such surfactants are commonly known as aliphatic or phenolic alkoxylates. Non-limiting representative examples include mixtures of ethoxylated C₁₂-C₁₆ linear primary alcohols, mixtures of C₁₂ and C₁₃ linear primary alcohols, mixtures of C₁₂-C₁₅ linear primary alcohols, and nonylphenol ethoxylates. In an aspect, surfactants include those surfactants that contain a functional group, e.g., -OH, capable of reacting with the acylated ethylene-olefin copolymer.

The quantity of surfactant used depends, in part, on its ability to solubilize the polyamine. The surfactant can also be added separately, instead of, or in addition to a concentrate, such that the total amount of surfactant in a finished additive concentrate can be about 10 wt. % or less.

The viscosity index modifying copolymers of the present disclosure can be incorporated into a lubricating composition in any convenient way. Thus, the viscosity index modifying copolymers can be added directly to a lubricating oil by dispersing or dissolving the same in the lubricating oil at the desired level of concentration. Such blending into the lubricating oil can occur at room temperature or elevated temperatures. In an aspect, the lubricating composition can contain (on an active ingredient (A.I.) basis) from about 0.1 to about 2.0 wt.%, for example from about 0.5 to about 1.0 wt.%, of the viscosity index modifying copolymers.

Alternatively, the viscosity index modifying copolymers can be blended with a suitable carrier or diluent oil to form an additive concentrate, and then blending the concentrate with a lubricating oil to obtain the final formulation. In an aspect, such additive concentrates can contain (on an active ingredient (A.I.) basis) from about 3 to about 45 wt. % viscosity index modifying copolymer additive and from about 20 to about 90 wt. % of a carrier or diluent oil, based on the concentrate weight. In an aspect, such additive concentrates can contain from about 10 to about 35 wt. % viscosity index modifying copolymer additive and from about 40 to about 60 wt. % of a carrier or diluent oil, based on the concentrate weight. The additive concentrates can also be blended with a suitable oil soluble solvent, for example, but not limited to, benzene, xylene, and toluene.

Suitable base oils for use herein include natural lubricating oils, synthetic lubricating oils and mixtures thereof. Base stocks obtained by isomerization of synthetic wax and slack wax can also be suitable, as wells as base stocks produced by hydrocracking (rather than solvent extracting) the aromatic and polar components of the crude. In general, both natural and synthetic base oils will each have a kinematic viscosity ranging from about 1 to about 40 cSt at about 100°C, although typical applications can require each oil to have a viscosity ranging from about 2 to about 20cST at about 100°C.

The American Petroleum Institute has categorized different basestock types as follows: Group I, > 0.03 wt. % sulfur, and/or <90 vol% saturates, viscosity index between 80 and 120; Group II, ≤ 0.03 wt. % sulfur, and ≥ 90 vol% saturates, viscosity index between 80 and 120; Group III, ≤ 0.03 wt. % sulfur, and ≥ 90 vol% saturates, viscosity index > 120; Group IV, all polyalphaolefins.

Suitable natural base oils include, but are not limited to, animal oils, vegetable oils, (e.g., castor oil and lard oil), petroleum oils, hydrorefined, solvent-treated or acid-treated mineral lubricating oils of the paraffinic, naphthenic and mixed paraffinic-naphthenic types. Oils derived from coal or shale are also useful base oils. In one embodiment of the present disclosure, the base oil used can be mineral oil.

The mineral oils useful in one embodiment of the present disclosure include all common mineral oil base stocks. These mineral oils include oils that are naphthenic or paraffinic in chemical structure. Oils that are refined by conventional methodology using acid, alkali, and clay or other agents such as aluminum chloride can be used, or they can be extracted oils produced by solvent extraction, for example, with solvents such as phenol, sulfur dioxide, furfural, dichlorodiethyl ether, etc. Such oils can be hydrotreated or hydrorefined, dewaxed by chilling or catalytic dewaxing processes, or hydrocracked. The mineral oil can also be produced from natural crude sources or be composed of isomerized wax materials or residues of other refining processes.

Suitable synthetic lubricating base oils used in this disclosure include one of any number of commonly used synthetic hydrocarbon oils, which include, but are not limited to, poly-alpha-olefins, alkylated aromatics, alkylene oxide polymers, interpolymers, copolymers and derivatives thereof where the terminal hydroxyl groups have been modified by esterification, etherification etc., esters of dicarboxylic acids and silicon-based oils.

For example, suitable synthetic base lubricating oils include hydrocarbon oils and halo-substituted hydrocarbon oils such as oligomerized, polymerized, and interpolymerized olefins (such as polybutylenes, polypropylenes, propylene, isobutylene copolymers, chlorinated polylactenes, poly(1-hexenes), poly(1-octenes) and mixtures thereof); alkylbenzenes (including dodecyl-benzenes, tetradecylbenzenes, dinonyl-benzenes and di(2-ethylhexyl)benzene); polyphenyls (such as biphenyls, terphenyls and alkylated polyphenyls); and alkylated diphenyl ethers, alkylated diphenyl sulfides, as well as their derivatives, analogs, and homologs thereof, and the like. In an embodiment, the synthetic base oils are oligomers of alpha-olefins, particularly oligomers of 1-decene, also known as polyalpha olefins or PAOs.

Suitable synthetic base lubricating oils also include alkylene oxide polymers, interpolymers, copolymers, and derivatives thereof where the terminal hydroxyl groups have been modified by esterification, etherification, etc. This class of synthetic oils is exemplified by: polyoxyalkylene polymers prepared by polymerization of ethylene oxide or propylene oxide; the alkyl and aryl ethers of these polyoxyalkylene polymers (e.g., methyl-polyisopropylene glycol ether having an average molecular weight of 1000, diphenyl ether of polypropylene glycol having a molecular weight of 100-1500); and mono- and poly-carboxylic esters thereof (e.g., the acetic acid esters, mixed C₃-C₈ fatty acid esters, and C₁₂ oxo acid diester of tetraethylene glycol).

Another suitable class of synthetic lubricating oils comprises the esters of dicarboxylic acids (e.g., phthalic acid, succinic acid, alkyl succinic acids and alkenyl succinic acids, maleic acid, azelaic acid, subric acid, sebacic acid, fumaric acid, adipic acid, linoleic acid dimer, malonic acid, alkylmalonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoethers, propylene glycol, etc.). Specific examples of these esters include dibutyl adipate, diisobutyl adipate, di(2-ethylhexyl) sebacate, di-n-hexyl fumarate, dioctyl sebacate, diisooctyl phthalate, diisooctyl azelate, diisooctyl adipate, diisodecyl azelate, didecyl phthalate, diisodecyl adipate, dieicosyl sebacate, the 2-ethylhexyl diester of linoleic acid dimer, and the complex ester formed by reacting one mole of sebacic acid with two moles of tetraethylene glycol and two moles of 2-ethyl-hexanoic acid, and the like.

Esters useful as synthetic base oils also include those made from C₅ to C₁₂ monocarboxylic acids and polyols and polyol ethers such as neopentyl glycol, trimethylolpropane pentaerythritol, dipentaerythritol, tripentaerythritol, and the like.

Silicon-based oils (such as the polyalkyl-, polyaryl-, polyalkoxy-, or polyaryloxy-siloxane oils and silicate oils) comprise another useful class of synthetic lubricating oils. These oils include tetra-ethyl silicate, tetraisopropyl silicate, tetra-(2-ethylhexyl) silicate, tetra-(4-methyl-2-ethylhexyl) silicate, tetra-(p-tert-butylphenyl) silicate, hexa-(4-methyl-2-pentoxy)-disiloxane, poly(methyl)-siloxanes and poly (methylphenyl) siloxanes, and the like. Other synthetic lubricating oils include liquid esters of phosphorus containing acids (e.g., tricresyl phosphate, trioctylphosphate, and diethyl ester of decylphosphonic acid), polymeric tetra-hydrofurans, poly-α-olefins, and the like.

Lubricating compositions containing an effective amount of the viscosity index modifying copolymers described herein can be used in numerous applications, including crankcase lubricating oils for spark-ignited and compression-ignited internal combustion engines, including, but not limited to, automobile and truck engines, marine and railroad diesel engines, and the like. Advantageous results can also be achieved by employing the additive mixtures of the present disclosure in base oils conventionally employed in and/or adapted for use as power transmission fluids, continuously variable transmission fluids, manual transmission fluids, hydraulic fluids, power steering fluids, shock absorber fluids and the like. Gear lubricants, industrial oils, pump oils and other lubricating oil compositions can also benefit from the incorporation therein of the additive mixtures of the present disclosure.

Lubricating compositions as disclosed herein can include additives in addition to the viscosity index modifying copolymer of the present disclosure. Non-limiting examples of additives that can be included are additional viscosity index improvers, antioxidants, corrosion inhibitors, detergents, dispersants, pour point depressants, antiwear agents, antifoamants, demulsifiers, friction modifiers, and the like.

According to an aspect of the present disclosure, there is disclosed a method of improving boundary film resistance of a lubricating composition, said method comprising providing a major amount of an oil of lubricating viscosity, and a minor amount of an additive composition comprising a viscosity index modifying copolymer comprising the reaction product of an acylated ethylene-olefin copolymer and a polyamine, wherein the polyamine comprises at least two primary or secondary amine functional groups

In another aspect, there is disclosed a method of modifying the viscosity of a lubricating composition, said method comprising providing a major amount of an oil of lubricating viscosity, and mixing with said oil a minor amount of an additive composition comprising a viscosity index improving copolymer comprising the reaction product of an acylated ethylene-olefin copolymer and a polyamine, wherein the polyamine comprises at least two primary or secondary amine functional groups.

In a further aspect, there is disclosed a method of lubricating an automotive engine, said method comprising adding to and operating in the crankcase of the automotive engine a lubricating composition comprising a major amount of an oil of lubricating viscosity and a minor amount of an additive composition comprising a viscosity index improving copolymer comprising the reaction product of an acylated ethylene-olefin copolymer and a polyamine, wherein the polyamine comprises at least two primary or secondary amine functional groups.

Additionally, there is disclosed a method of improving the low temperature properties of a lubricating oil, said method comprising combining an oil of lubricating viscosity and an olefin copolymer composition comprising the reaction product of an acylated ethylene-olefin copolymer and a polyamine, wherein the polyamine comprises at least two primary or secondary amine functional groups.

The acylated ethylene-olefin copolymers of the present disclosure can be post-treated so as to impart additional properties necessary or desired for a specific lubricant application. Post-treatment techniques are well known in the art and include, but are not limited to, boronation, phosphorylation, and maleination.

### EXAMPLES

The following non-limiting examples are given to illustrate aspects of the disclosed embodiments with respect to the preparation of the multi-functional olefin copolymers of the present disclosure. The examples are not intended to limit the embodiments as disclosed herein. In these examples, as well as elsewhere in this application, all parts and percentages are by weight of the composition, unless otherwise indicated.

### EXAMPLE 1

An acylated ethylene-propylene copolymer was prepared by free radically grafting maleic anhydride, in the presence of a solvent, onto an ethylene-propylene copolymer backbone. The acylated ethylene-propylene copolymer had a number average molecular weight (Mₙ) of approximately 40,000 as determined by gel permeation chromatography. The reaction conditions and molar proportions of maleic anhydride and ethylene-propylene copolymer were such that 7.2 molecules of maleic anhydride were grafted onto the olefin copolymer backbone. This is equivalent to 0.43 carboxylic groups per 1000 Mn of polymer backbone (e.g., 2 x 5 = 10 carboxylic groups/23,000 Mn = 0.43 carboxylic groups/1000 Mₙ) to form the acylated ethylene-propylene copolymer.

186.7g solution of the acylated ethylene-propylene copolymer containing about 25% polymer and 75% process oil was charged to a reaction vessel equipped with a nitrogen sparge and Dean-Stark trap, followed by an additional 299.4g of process oil. The mixture was heated to about 140°C. To this mixture, 2.2g of a molten-blend was poured in. The molten-blend was prepared by mixing 1.1g of N-phenyl-phenylenediamine and 1.1g of a surfactant (Surfonic L24-2, available from Huntsman Corp. of The Woodlands, TX) and heating in an oven at 80°C. The resulting mixture was agitated at 140°C for 2 hrs. At this point, 0.42g of another molten-blend was poured in. This molten-blend was prepared by mixing 0.21g of 1,3-phenylenediamine and 0.21 g of the above surfactant and heating in an oven at 80°C. The resulting mixture was agitated at 140°C for 2 hrs, followed by 160°C for 2 hrs. The product thus obtained had 0.041 % nitrogen content and had a kinemetic viscosity of 212 cst at 100°C.

The reaction product of Example 1 was blended into a heavy duty diesel 15W-40 formulation, listed in Table 1 below as Inventive Formulation 2. This formulation contained 10 wt.% of the reaction product of Example I. As a comparison formulation, Comparative Formulation 1 was formulated using the same type of base oil except containing 10 wt.% of a conventional OCP viscosity index improver (OCP VII). The resulting blend viscometrics and the film formation properties of these lubricating fluids were determined utilizing a High Frequency Reciprocating Rig (HFRR) (see SAE 2002-01-2793 "Film Formation Properties of Polymers in the Presence of Abrasive Contaminants" by Mark T. Devlin et al.)

For the HFRR film test, 6% of carbon black was added to the fluids and 1-2 mL of the fluids were placed in the HFRR cell. During the test, the ball was oscillated across the disk at a frequency of 20Hz over a 1 mm path. A load of 0.1 N was applied between the ball and the disk during the test, which lasted for 10 minutes. The formation of boundary film was measured throughout the 10 minute test, and the average film measurement (percent resistance) was reported. A boundary film is formed when the ball and disk are separated, and the current running between the ball and disk is reduced and can be recorded as a percent resistance. The higher the percent resistance, the more tenacious the boundary film. The results of the HFRR test are displayed in Table 1 below.

**TABLE 1**

| | Comparative Formulation I | Inventive Formulation II |
|---|---|---|
| Core Pack | 6.90% | 6.90% |
| 1300 MW_{N} PIB dispersant, post treated with maleic anhydride and boric acid | 2.50% | 2.50% |
| 2100 MW_{N} PIB dispersant | 5.73% | 5.73% |
| OCP VII | 10.00% | 0.00% |
| VII of Example 1 | 0.00% | 10.00% |
| Base oil | remainder | remainder |
| | | |
| KV @ 100°C | 17.35 | 17.53 |
| HFRR film measurement (average of 2 runs) | 17 ± 5% | 68.5 ± 0.5% |

As the results in Table I indicate, the viscosity index modifying product of this disclosure (Inventive Formulation II) gave comparable thickening to the oil as compared to Comparative Formulation I (indicated by the kinematic viscosity (KV) of the formulations) and produced a much more tenacious boundary film (68.5 ± 0.5%), as compared 17 ± 5% for Comparative Formulation I.

At numerous places throughout the specification, reference has been made to a number of U.S. Patents. All such cite documents are expressly incorporated in full into this disclosure as if fully set forth herein.

This disclosure is susceptible to considerable variation in its practice. Accordingly, this disclosure is not limited to the specific exemplifications set forth hereinabove. Rather, this disclosure is within the spirit and scope of the appended claims, including the equivalents available as a matter of law. Other embodiments of the present disclosure will be apparent to those skilled in the art from consideration of the specification and practice of the embodiments disclosed herein.

As used throughout the specification and claims, "a" and/or "an" can refer to one or more than one. Unless otherwise indicated, all numbers expressing quantities of ingredients, properties such as molecular weight, percent, ratio, reaction conditions, and so forth used in the specification and claims are to be understood as being modified in all instances by the term "about." Accordingly, unless indicated to the contrary, the numerical parameters set forth in the specification and claims are approximations that can vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the disclosed embodiments are approximations, the numerical values set forth in the specific examples are reported as precisely as possible. Any numerical value, however, inherently contains certain errors necessarily resulting from the standard deviation found in their respective testing measurements. It is intended that the specification and examples be considered as exemplary only, with a true scope and spirit of the embodiments being indicated by the following claims.

The patentees do not intend to dedicate any disclosed embodiments to the public, and to the extent any disclosed modifications or alterations may not literally fall within the scope of the claims, they are considered to be part of the disclosure under the doctrine of equivalents.

## Claims

1. An additive concentrate comprising:
a carrier or diluent oil; and
a viscosity index modifying copolymer comprising the reaction product of an acylated ethylene-olefin copolymer and a polyamine, wherein the polyamine comprises at least two primary or secondary amine functional groups.

2. The additive concentrate of claim 1, wherein the carrier or diluent oil is present in an amount ranging from 20 to 90 weight percent, on an active ingredient basis, and the viscosity index modifying copolymer is present in an amount ranging from 3 to 45 weight percent of a viscosity index modifying copolymer.

3. The additive concentrate of any one of claims 1-2, wherein the acylated ethylene-olefin copolymer comprises a copolymer of ethylene and one or more C₃-C₂₈ alpha-olefins.

4. The additive concentrate of any one of claims 1-3, wherein the acylated ethylene-olefin copolymer has a number average molecular weight of from 20,000 to 45,000.

5. The additive concentrate of claim 3, wherein said C₃-C₂₈ alpha-olefin is selected from propylene, 1-butene, 1-pentene, 1-hexene, 1-octene, styrene, 1,5-hexadiene, 1,6-heptadiene, 1,7-octadiene, 4-methylbutene-1, 5-methylpentene-1, 6-methylheptene-1, and mixtures thereof.

6. The additive concentrate of any one of claims 1-5, wherein said polyamine is selected from:
(a) 4,4-diaminodiphenylamine represented by formula (I): 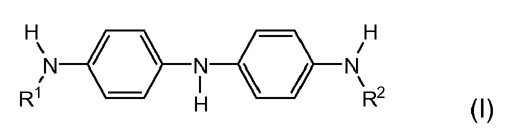 wherein R¹ and R² are each independently selected from -H and an alkyl group comprising from 1 to 24 carbon atoms;
(b) polytetrahydrofuran bis(aminopropyl) terminated;
(c) hexamethylene diamine;
(d) bis(aminopropyl) piperazine; and
(e) phenylenediamine represented by formula (II): 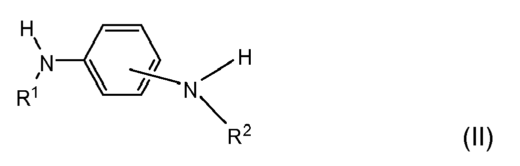 wherein R₁ and R₂ are each independently selected from -H and an alkyl group comprising from 1 to 24 carbon atoms.

7. The additive concentrate of any one of claims 1-6, further comprising at least one additive selected from additional viscosity index improvers, antioxidants, corrosion inhibitors, detergents, dispersants, pour point depressants, antiwear agents, antifoamants, demulsifiers, and friction modifiers.

8. A lubricating composition comprising:
a major amount of an oil of lubricating viscosity; and
a minor amount of an additive concentrate as claimed in any one of claims 1-7.

9. The lubricating composition of claim 8, wherein the viscosity index modifying copolymer is present in an amount ranging from 0.1 wt.% to 2.0 wt.% , relative to the total weight of the lubricating composition.

10. The lubricating composition of any one of claims 8-9, wherein the viscosity index modifying copolymer is present in an amount ranging from 0.5 wt.% to 1.0 wt.%, relative to the total weight of the lubricating composition.

11. A method of improving boundary film resistance of a lubricating composition, said method comprising:
providing a major amount of an oil of lubricating viscosity; and
mixing with said oil a minor amount of an additive concentrate as claimed in any one of claims 1-7.

12. A method of modifying the viscosity of a lubricating composition, said method comprising:
providing a major amount of an oil of lubricating viscosity; and
mixing with said oil a minor amount of an additive concentrate as claimed in any one of claims 1-7.

13. A method of lubricating an automotive engine, said method comprising adding to and operating in the crankcase of said automotive engine a lubricating composition as claimed in any one of claims 8-10.
